# EUROPÄISCHE PATENTSCHRIFT

(11) **EP 2 292 372 B1**
(45) Veröffentlichungstag und Bekanntmachung des Hinweises auf die Patenterteilung: **03.10.2012**
(21) Anmeldenummer: 10002655.8
(22) Anmeldetag: 17.08.2009
(51) Int. Cl.: B23K 26/38

(54) **Verfahren zur Herstellung eines Lochs unter Verwendung verschiedener Laserstellungen**
Method for making a hole using different laser positions
Procédé de création d'un trou en utilisant divers réglages laser

(43) Veröffentlichungstag der Anmeldung: 09.03.2011
(62) Teilanmeldung aus: 09010546.1
(73) Patentinhaber: SIEMENS AKTIENGESELLSCHAFT, 80333 München (DE)
(72) Erfinder: Münzer, Jan, 10439 Berlin (DE); Podgorski, Thomas, 16515 Oranienburg OT Lehnitz (DE)

(56) Entgegenhaltungen:
- EP-A1- 0 950 463
- EP-A2- 1 813 378
- US-A- 5 747 769
- US-A1- 2004 232 122
- US-B1- 6 420 677
- US-B1- 6 744 010

## Beschreibung

Die Erfindung betrifft ein Verfahren zur Herstellung eines komplexen Lochs gemäß dem Oberbegriff des Anspruchs 1. Die EP 0 950 463 A1 offenbart einen solchen Verfahren.

Die Verwendung des Lasers zur Herstellung von Löchern in Substraten ist bekannt, bei der der Laser über die Oberfläche verfahren wird.

Verfahren zur Fertigung von Bohrungen mit seitlich begrenzenden Flanken sind im Stand der Technik bekannt. So ist in der US 6,420,677 ein Verfahren zur lasergestützten Ausbildung von Kühlluftbohrungen in Turbinenschaufeln beschrieben. Dabei ist vorgesehen, eine Folge von Laserpulsen auf die Oberfläche der Turbinenschaufel abzugeben, wobei Teile des Turbinenmaterials verdampft werden, so dass eine Bohrung entlang einer Z-Achse ausgebildet wird. Der Laserstrahl wird während der Bearbeitung um Winkel von +/- 10-20° gegenüber der Z-Achse gekippt auf die Schaufeloberfläche abgegeben.

Es ist daher Aufgabe der vorliegenden Erfindung ein Verfahren der eingangs genannten Art anzugeben, bei dem keine Beschädigung der Bohrungsflanke durch Wechselwirkung mit dem Loch auftritt.

Diese Aufgabe wird gelöst durch ein Verfahren gemäß Anspruch 1.

Diese Aufgabe wird gelöst durch ein Verfahren gemäß Anspruch 1.

Diese Aufgabe wird erfindungsgemäß dadurch gelöst, dass in mehreren Fertigungsschritten jeweils ein Teilvolumen des Lochs ausgebildet wird.

In den Unteransprüchen sind weitere vorteilhafte Maßnahmen aufgelistet, die beliebig miteinander kombiniert werden können, um weitere Vorteile zu erzielen.

Grundgedanke der Erfindung ist es somit, das Gesamtvolumen des zu fertigenden Lochs in Teilvolumen aufzuteilen und diese in einzelnen Fertigungsschritten auszubilden. Zuerst wird ein Innenanteil erzeugt. Ein Rest verbleibt, um den Diffusor des Lochs zu bilden. Das Bauteilmaterial einiger einzelner Teilvolumina dieses Restes wird entfernt, indem jeweils eine seitliche Flanke der Bohrung mit dem Laserstrahl abgefahren wird.

Der Laserstrahl wird vorzugsweise so ausgerichtet, dass er mit der abgefahrenen Flanke einen Winkel von größer 8° einschließt.
Da der Laserstrahl während der Fertigung der Bohrung nicht nah zu und parallel mit der bereits ausgebildeten Flanke der Bohrung auf die Bauteiloberfläche gerichtet wird, ist ausgeschlossen, dass es zu einer unzulässigen Wechselwirkung zwischen dem Laserstrahl und der Flanke kommt. Weiterhin erlaubt die Aufteilung des Gesamtvolumens der Bohrung in mehrere Teilvolumina komplexe Bohrungsgeometrien auszubilden.

Gemäß einer weiteren Ausbildung der Erfindung ist vorgesehen, dass der Laserstrahl so ausgerichtet wird, dass er mit der abgefahrenen Flanke einen Winkel größer 10° und kleiner 90°, bevorzugt von größer 15° und kleiner 80° und besonders bevorzugt von größer 20° und kleiner 60° einschließt. Insbesondere bevorzugt ist ein Winkel von 9°.

In Weiterbildung der Erfindung ist vorgesehen, einen gepulsten Laserstrahl auf die Bauteiloberfläche im Loch zu richten. Dabei kann ein Laserstrahl mit variabler Pulsbreite verwendet werden. Die Pulsbreite kann im Bereich von 50ns bis 800ns, bevorzugt von 70ns bis 600ns und insbesondere von 200ns bis 500ns liegen. Besonders bevorzugt ist eine Pulsbreite von 400ns. Mit einem solchen gepulsten Laserstrahl kann das Bauteilmaterial besonders schnell verdampft werden.
Dies ist besonders vorteilhaft für die Herstellung des Diffusors.

Vorteilhafter Weise kann auch ein Laserstrahl mit einer Frequenz im Bereich von 20kHz bis 40 kHz, bevorzugt von 25kHz bis 35kHz und insbesondere von 28kHz bis 32kHz auf die Bauteiloberfläche gerichtet werden.
Dies ist besonders vorteilhaft für die Herstellung des Diffusors.

Eine bevorzugte Weiterbildung der Erfindung sieht vor, eine Bohrung in einem Turbinenbauteil, insbesondere in einer Turbinenschaufel zu fertigen. Bei der Bohrung kann es sich insbesondere um eine vollständige Kühlluftbohrung oder um eine Diffusoröffnung einer Kühlluftbohrung handeln.

Es zeigen:
- Figur 1: ein herzustellendes Filmkühlloch und
- Figuren 2-9: schematische Darstellungen des Ablaufs des Verfahrens,
- Figur 10: eine Gasturbine,
- Figur 11: eine Turbinenschaufel und
- Figur 12: eine Liste von Superlegierungen.

Die Beschreibung und die Figuren stellen nur Ausführungsbeispiele der Erfindung dar.

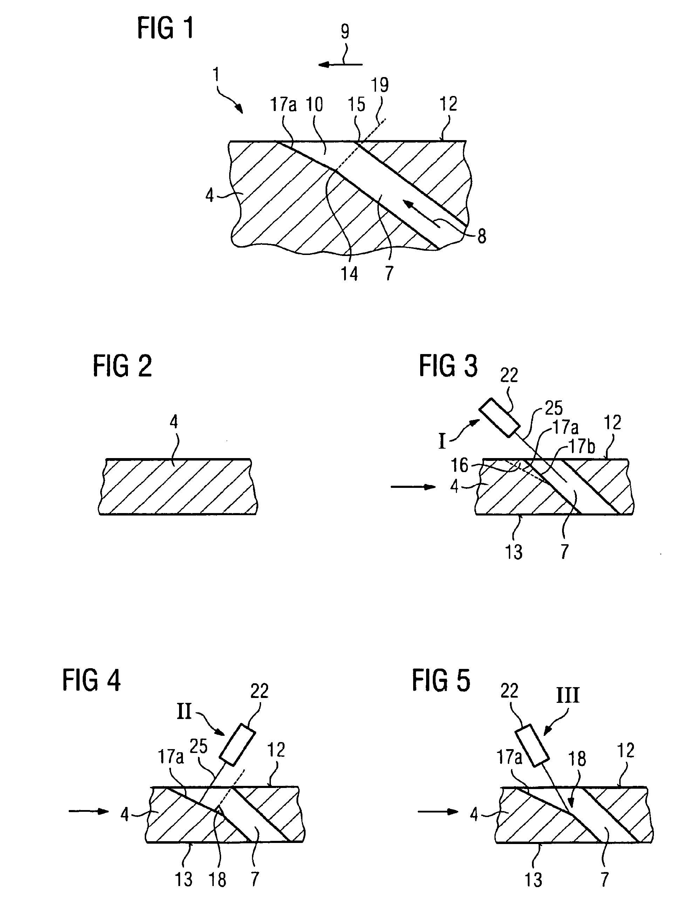

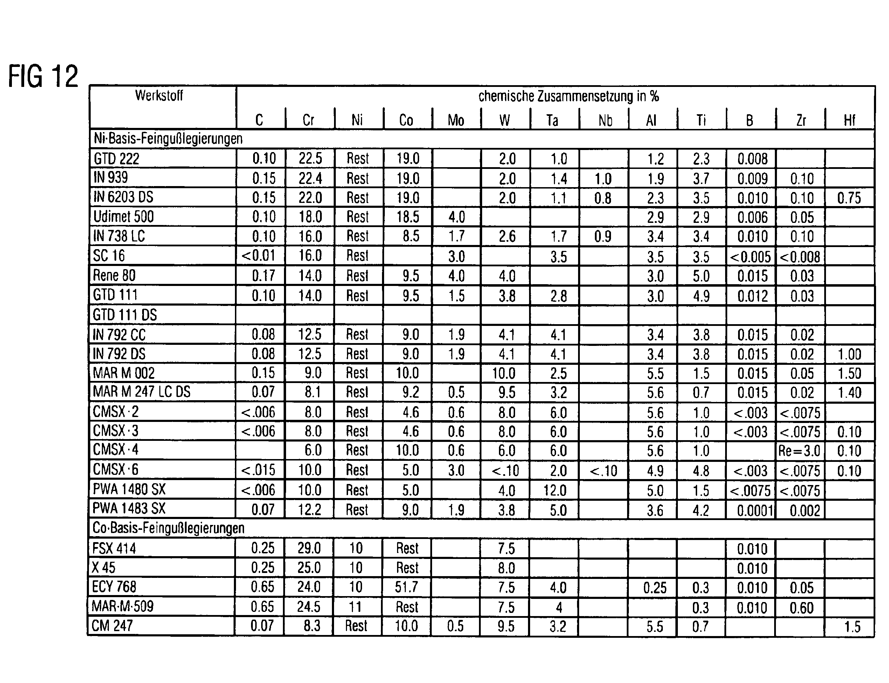

In Figur 1 ist ein Loch 1 in einem Substrat 4 dargestellt. Das Substrat 4 ist insbesondere bei Turbinenbauteilen wie Turbinenschaufeln 120, 130 eine nickel- oder kobaltbasierte Superlegierung gemäß Figur 12. Das Loch 1 ist durchgehend (kein Sackloch).

Die Erfindung wird anhand eines Filmkühllochs ohne Einschränkung der erfinderischen Idee erläutert.

Das Filmkühlloch 1 wird in einer Überströmrichtung 9 eines Heißgases überströmt. Eine Ausströmrichtung 8 eines Kühlmediums aus dem Filmkühlloch 1 und die Überströmrichtung 9 bilden einen spitzen Winkel miteinander.

Das Filmkühlloch 1 weist zumindest zwei verschieden ausgebildete Abschnitte 7, 10 auf, insbesondere weist es 1 nur zwei Abschnitte 7, 10 auf.
Der erste Abschnitt ist ein Innenanteil 7, der im Querschnitt vorzugsweise zylindrisch oder rotationssymmetrisch ausgebildet ist oder vorzugsweise zumindest einen konstanten Querschnitt in einer Ausströmrichtung 8 aufweist.

Ab einer gewissen Tiefe unterhalb einer äußeren Oberfläche 12 des Substrats 4 bis zur Oberfläche 12 des Substrats 4 verbreitert sich der Querschnitt des Filmkühllochs 1 gegenüber dem Innenanteil 7 erheblich. Dies stellt den Diffusor 10 dar.

An einem Knickpunkt 14 einer linken Fläche 17a des Filmkühllochs 1, der den Übergang vom Diffusor 10 zum Innenanteil 7 gegenüberliegend darstellt, schneidet eine Senkrechte 19 auf der Innenfläche 17a einen gegenüberliegenden Abschnitt 15 im Substrat 4 an der Oberfläche 12.

In den Figuren 2 - 9 ist der schematische Ablauf des Verfahrens zur Herstellung des Lochs 1 dargestellt.

Im Folgenden wird ein Laser 22 exemplarisch als Bearbeitungsmaschine verwendet.

Das Verfahren beginnt mit der Bereitstellung des Substrats 4 (Fig. 2), das dann mit einem Laser 22 oder Elektronenstrahlquelle in einer ersten Winkelstellung (I), vorzugsweise der Laserstellung (I) bearbeitet wird.

Der Winkel der Winkelstellungen I, II, III ist definiert durch eine mittlere Linie eines Laserstrahls 25 und die Oberfläche 12 um das Filmkühlloch 1.

Dabei wird der Innenanteil 7 von der Oberfläche 12 bis zur gegenüberliegenden inneren Fläche 13 des Substrats 4 (bei Turbinenschaufeln im Hohlraum) hergestellt (Fig. 3). Vorzugsweise muss der Laser 22 dabei nicht verfahren werden. Dabei verbleibt ein Rest 16 im herzustellenden Loch 1, um den Diffusor 10 fertig zu stellen (Fig. 3). Der Innenanteil 7 ist fertig gestellt.

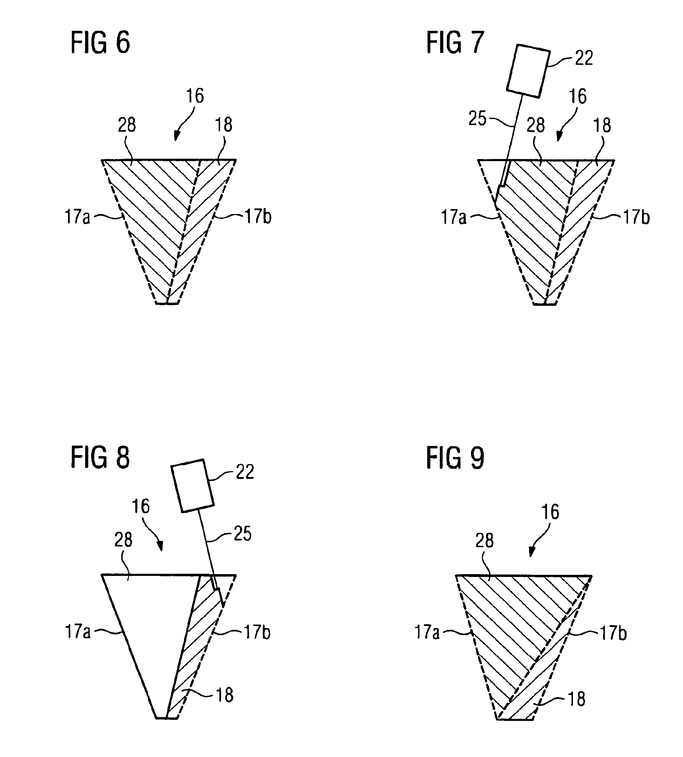

In einem weiteren Schritt (Fig. 4) und in einer zweiten Laserstellung II, die von der ersten Laserstellung I verschieden ist, wird ein erstes Teilvolumen des Restes 16, ein linkes Teilvolumen 28 (Fig. 6 - 9) als erster Abschnitt des noch abzutragenden Rests 16 für den Diffusor 10 abgetragen. Dabei hat sich die Winkelstellung des Lasers 22 gegenüber der Fläche der Flanke in der Stellung II im Vergleich zu der Winkelstellung I verändert.

Dabei II wird der Laser 22 verfahren, vorzugsweise über die rechte Flanke 17b des Rests 16, bis eine linke Flanke 17a des Diffusors 10 freiliegt. Das Verfahren des Lasers 22 stellt keine andere Winkelstellung dar.

Hier II werden vorzugsweise auch andere Laserparameter wie Pulslängen verwendet als in der ersten Laserstellung I.

Dabei verbleibt jedoch weiterhin ein zweites Teilvolumen 18 des Restes 16, ein rechtes Teilvolumen 18, das in dieser Laserstellung II nicht bearbeitet werden kann, da ansonsten die Spitze 15 (Figur 1) abgetragen werden würde.

Daher wird in einem letzten Verfahrensschritt (Fig. 5) der Laser 22 in eine geänderte dritte Stellung III gebracht, um das rechte Teilvolumen 18 abzutragen, so dass ein Filmkühlloch gemäß Figur 1 entsteht.

Die Winkelstellung III des Lasers 22 ist verschieden von der Stellung II, insbesondere auch von der Winkelstellung I. Die Winkelstellungen I, II, III des Lasers 22 entsprechen den Teilschritten.

Die Herstellung bzw. die Veränderung der Laserstellungen I, II, III des Lasers 22 gegenüber dem Substrat 4 ist bedingt durch die Tatsache, dass ein Laser 22 nicht verwendet werden kann, wenn parallel zur Laserstrahlrichtung eine Schnittfläche herzustellen ist, da der Laserstrahlkegel eine Streuung von 10° aufweist, wobei der Kegel sich nicht mit einer Endkontur des einen herzustellenden Bereichs überschneiden darf.

Die aufwändigen Verfahrensschritte (eventuell verschiedene Laser, verschieden lange Laserpulse, verschiedene Laserabtragungsarten und verschiedene Laserstellungen) ergeben überragende gute Ergebnisse als wenn man den Laser/die Laser in einer einzigen Mittelstellung von II und III oder nur in Stellung I verwenden würde.

Es kann vorzugsweise nur ein Laser 22 für die gesamte Herstellung des Filmkühllochs 1 verwendet werden.

Aber auch zwei Laser können vorzugsweise benutzt werden, wenn dies erforderlich ist, insbesondere für die Herstellung des Diffusors 10, bei dem für den zweiten Laser vorzugsweise andere Parameter verwendet werden, so dass die Laser 22 verschiedene Leistungsmerkmale (Leistung, Pulsdauer, Frequenz, ...) aufweisen.

Dabei ist insbesondere vorgesehen, dass der Laserstrahl so ausgerichtet wird, dass er mit der abgefahrenen Flanke einen Winkel größer 10° und kleiner 90°, bevorzugt von größer 15° und kleiner 80° und besonders bevorzugt von größer 20° und kleiner 60° einschließt. Insbesondere bevorzugt ist ein Winkel von 9°.

In einer Weiterbildung ist vorgesehen, einen gepulsten Laserstrahl zu verwenden. Dabei kann ein Laserstrahl mit variabler Pulsbreite verwendet werden. Die Pulsbreite kann im Bereich von 50ns bis 800ns, bevorzugt von 70ns bis 600ns und insbesondere von 200ns bis 500ns liegen. Besonders bevorzugt ist eine Pulsbreite von 400ns. Mit einem solchen gepulsten Laserstrahl kann das Bauteilmaterial besonders schnell verdampft werden.
Dies ist besonders vorteilhaft für die Herstellung des Diffusors 10, also in den Winkelstellungen II, III.
Vorzugsweise werden diese Pulsbreiten nicht in der Winkelstellung I verwendet.

Vorteilhafter Weise kann auch ein Laserstrahl mit einer Frequenz im Bereich von 20kHz bis40 kHz, bevorzugt von 25kHz bis 35kHz und insbesondere von 28kHz bis 32kHz auf die Bauteiloberfläche gerichtet werden.
Dies ist besonders vorteilhaft für die Herstellung des Diffusors 10, also in den Winkelstellungen II, III.
Vorzugsweise werden diese Frequenzen nicht in der Winkelstellung I verwendet.

Die Figur 6 zeigt den Rest 16 nach Figur 3, wobei der abzutragende Rest 16 durch rechts und links seitlich begrenzende Flanken 17a und 17b mit gestrichelten Linien angedeutet ist. Ebenfalls mit einer gestrichelten Linie ist das Gesamtvolumen des abzutragenden Rests 16 in ein linkes 28 und ein rechtes 18 Teilvolumen unterteilt.

Die Fertigung des linken Teilvolumens 28 ist in der Figur 7 gezeigt und die Figur 8 illustriert die des rechten Teilvolumens 18.
Um in einem ersten Fertigungsschritt das linke Teilvolumen 28 des Restes 16 zu beseitigen, wird ein Laserstrahl 25 von einem Laser 22 auf die Bauteiloberfläche abgegeben. Dabei ist der Laser 22 so ausgerichtet, dass der Laserstrahl 25 mit der linken Flanke 17a einen Winkel vorzugsweise größer 5° einschließt und zunächst auf den unmittelbar an die linke Flanke 17 angrenzenden Bereich des linken Teilvolumens 13 trifft, wo er einen Teil des Bauteilmaterials verdampft.

Der Laserstrahl 25 wird solange weiter auf die Bauteiloberfläche gerichtet, bis er die linke Flanke 17a erreicht. Dann wird der Laser 22 in der Zeichnung nach rechts bewegt, so dass der Laserstrahl 25 auf noch in dem Teilvolumen 13 vorhandenes Bauteilmaterial trifft, das dann wiederum bis zur linken Flanke 17a verdampft wird. Auf diese Weise wird mit dem Laserstrahl 25 die gesamte Flanke 17a des Teilvolumens 13 abgefahren.

Nachdem das gesamte Teilvolumen 28 des Restes 16 auf diese Weise gefertigt worden ist, wird der Laser 22 gegen den Uhrzeigersinn gedreht und so ausgerichtet, dass der Laserstrahl 25 mit der rechten Flanke 17b einen Winkel größer 8° einschließt und zunächst auf den unmittelbar an die rechte Flanke 17b angrenzenden Bereich des rechten Teilvolumens 18 auftrifft, wo er einen Teil des Bauteilmaterials verdampft. Anschließend wird in der bereits beschriebenen Weise die rechte Flanke 17b mit dem Laserstrahl 25 abgefahren, um auch das rechte Teilvolumen 18 abzutragen (Fig. 8).

Während der Entfernung des Restes 16 kommt es zu keiner unzulässigen Wechselwirkung zwischen dem Laserstrahl 25 und dem Filmkühlloch 1. Somit ist eine Beschädigung der Flanken des Filmkühllochs 1 ausgeschlossen.

Die Figur 9 zeigt den Rest 16 der Figur 2 in schematischer Darstellung, wobei hier eine alternative Bohrungsgeometrie angedeutet ist, die durch seitlich begrenzende Flanken 17a und 17b definiert wird.
Bei dieser alternativen Bohrungsgeometrie sind die Teilvolumina 28 und 18 übereinander angeordnet, wobei das Teilvolumen 18 vorzugsweise mit der Spitze an die äußere Oberfläche 12 des Bauteils 1 angrenzt.

Die alternative Entfernung wird in der bereits geschilderten Weise gefertigt.

Die Erzeugung des Filmkühllochs kann auch wie oben beschrieben erfolgen, wenn eine metallische Haftvermittlerschicht, vorzugsweise des Typs MCrAlY auf dem Substrat 4 und/oder eine keramische Schicht auf einer MCrAlY-Schicht oder auf dem Substrat 4 vorhanden ist.

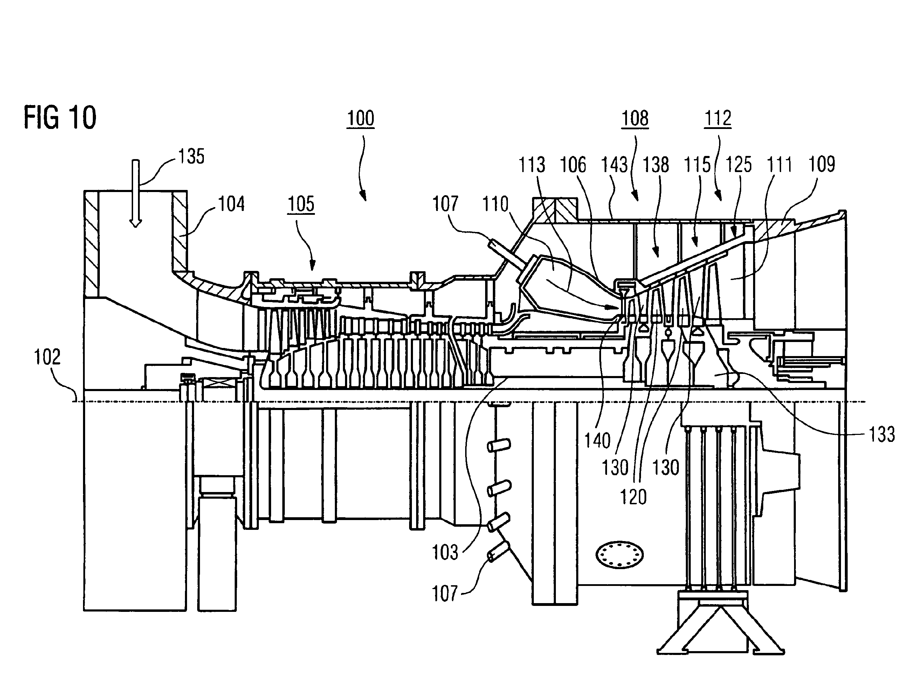

Die Figur 10 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium, Scandium (Sc) und/oder zumindest ein Element der Seltenen Erden bzw. Hafnium). Solche Legierungen sind bekannt aus der EP 0 486 489 B1, EP 0 786 017 B1, EP 0 412 397 B1 oder EP 1 306 454 A1. Auf der MCrAlX kann noch eine Wärmedämmschicht vorhanden sein, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

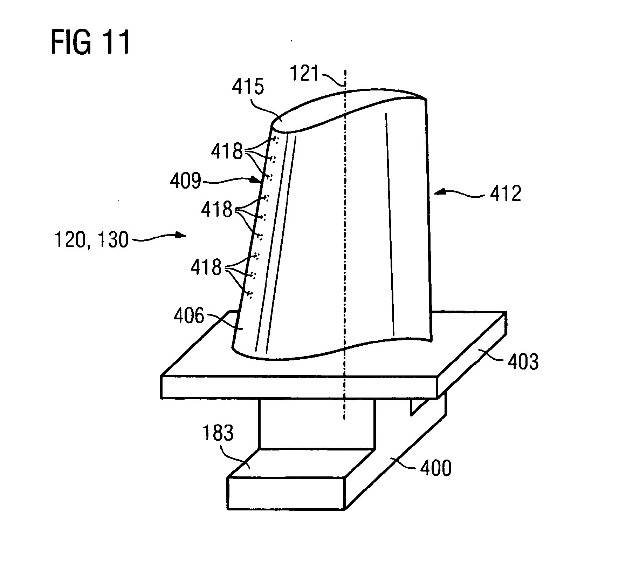

Die Figur 11 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).

Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1.
Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8A1-0, 6Y-0, 7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 418 (gestrichelt angedeutet) auf.

## Patentansprüche

1. Verfahren zur Herstellung eines komplexen Lochs (1) in einem Substrat (4),
das eine Oberfläche (12) und eine innere Fläche aufweist, wobei das Loch ein durchgehendes Filmkühlloch (1) ist,
das (1) einen Innenanteil (7) und einen Diffusor (10) aufweist,
der einen verbreiterten Querschnitt gegenüber dem Innenanteil aufweist,
wobei in einem ersten Teilschritt der Innenanteil (7) des Filmkühllochs (1) hergestellt wird,
wobei auch gleichzeitig ein Teil des Diffusors (10) hergestellt wird,
wobei der noch verbliebene Rest (16, 18, 28) zur Herstellung des Diffusors (10) in einem zweiten und dritten Teilschritt abgetragen wird,
wobei in dem ersten Teilschritt der Innenanteil (7) von der Oberfläche (12) bis zur gegenüberliegenden inneren Fläche (13) des Substrats mit einem Laser (22) in der ersten Winkelstellung (I) hergestellt wird,
**dadurch gekennzeichnet, dass**
in dem zweiten Teilschritt die Winkelstellung des Lasers (22) gegenüber der Fläche der Flanke im Vergleich zu der Winkelstellung (I) in eine zweite Winkelstellung (II) verändert wird,
und der Laser in der Winkelstellung (II) verfahren wird, bis eine Flanke (17a) des Diffusors (10) freiliegt,
so dass dabei ein Teilvolumen (18) des Restes (16, 18, 28) verbleibt und
dass in dem dritten Teilschritt die Winkelstellung des Lasers von der Winkelstellung (II) des zweiten Teilschritts verschieden ist, um das Teilvolumen (18) abzutragen,
wobei der Winkel der Winkelstellungen (I, II, III) durch eine mittlere Linie eines Laserstrahls (25) des Lasers (22) und die Oberfläche um das Loch definiert ist.

2. Verfahren nach Anspruch 1,
**dadurch gekennzeichnet, dass**
ein Laser (22) zur Herstellung des Innenanteils (7) oder in der Winkelstellung (I) nicht verfahren wird.

3. Verfahren nach Anspruch 1 oder 2,
**dadurch gekennzeichnet, dass**
nur ein Laser (22) verwendet wird.

4. Verfahren nach Anspruch 1, 2 oder 3,
**dadurch gekennzeichnet, dass**
zumindest zwei, insbesondere nur zwei Laser (22) verwendet werden,
die (22) unterschiedliche Leistungsmerkmale aufweisen.

5. Verfahren nach Anspruch 1, 2, 3 oder 4,
**dadurch gekennzeichnet, dass**
für die Herstellung des Innenanteils (7) oder in der Winkelstellung (I) andere Parameter des Lasers (22) oder der Laser (22) verwendet werden als bei der Herstellung des Diffusors (10) oder des Restes (16, 18, 28) oder in den Winkelstellungen (II, III).

6. Verfahren nach Anspruch 1, 2, 3, 4 oder 5,
**dadurch gekennzeichnet, dass**
der Laser (22) bei der Herstellung des Diffusors (10) verfahren wird,
insbesondere in zumindest einer der Winkelstellungen II, III, IV, V,
ganz insbesondere über eine innenliegende Flanke (17a, 17b) des Restes (16, 18, 28) verfahren wird.

7. Verfahren nach Anspruch 1, 2, 3, 4, 5 oder 6,
**dadurch gekennzeichnet, dass**
in mehreren Fertigungsschritten jeweils ein Teilvolumen (13, 18) des verbliebenen Rest (16, 18, 28) durch Abfahren einer seitlichen Flanke (17a, 17b) des Rests (16, 18, 28) des Diffusors (10) mit dem Laserstrahl (25) ausgebildet wird,
wobei der Laserstrahl (25) so ausgerichtet wird,
dass er mit der abgefahrenen Flanke (17a, 17b) einen Winkel von größer 8° einschließt.

8. Verfahren nach Anspruch 6 oder 7,
**dadurch gekennzeichnet, dass**
der Laserstrahl (25) so ausgerichtet ist, dass er mit der abgefahrenen Flanke (17a, 17b) einen Winkel von größer 10° und kleiner 90°, bevorzugt von größer 15° und kleiner 80° und besonders bevorzugt von größer 20° und kleiner 60° einschließt.

9. Verfahren nach einem oder mehreren der vorhergehenden Ansprüche 1, 2, 3, 4, 5, 6, 7 oder 8,
**dadurch gekennzeichnet, dass**
ein gepulster Laserstrahl (25) verwendet wird, insbesondere zum Abtrag des Restes (16, 18, 28) oder in der zumindest zweiten Winkelstellung (II, III, ...), ganz insbesondere nur zum Abtrag des Restes (16, 18, 28).

10. Verfahren nach einem oder mehreren der vorhergehenden Ansprüche 1, 2, 3, 4, 5, 6, 7, 8 oder 9,
bei dem ein Laserstrahl (25) mit variabler Pulsbreite verwendet wird,
insbesondere zum Abtrag des Restes (16, 18, 28) oder in der zumindest zweiten Winkelstellung (II, III, ...), ganz insbesondere nur zum Abtrag des Restes (16, 18, 28).

11. Verfahren nach Anspruch 1, 2, 3, 4, 5, 6, 7, 8, 9 oder 10,
**dadurch gekennzeichnet, dass**
ein Laserstrahl (25) mit einer Pulsbreite im Bereich von 50ns bis 800ns,
bevorzugt von 70ns bis 600ns und insbesondere von 200ns bis 500ns verwendet wird,
insbesondere zum Abtrag des Restes (16, 18, 28) oder in der zumindest zweiten Winkelstellung (II, III, ...), ganz insbesondere nur zum Abtrag des Restes (16, 18, 28).

12. Verfahren nach einem oder mehreren der vorhergehenden Ansprüche 1 bis 11,
**dadurch gekennzeichnet, dass**
der Laserstrahl (25) mit einer Frequenz im Bereich von 20kHz bis 40kHz,
bevorzugt von 25kHz bis 35kHz und insbesondere von 28kHz bis 32kHz verwendet wird,
insbesondere zum Abtrag des Restes (16, 18, 28) oder in der zumindest zweiten Winkelstellung (II, III, ...), ganz insbesondere nur zum Abtrag des Restes (16, 18, 28).

13. Verfahren nach einem oder mehreren der vorhergehenden Ansprüche 1 bis 12,
**dadurch gekennzeichnet, dass**
das durchgehende Loch (1) in einem Turbinenbauteil (120, 130, 155) mit einem Substrat (4) ausgebildet wird,
bei dem der Diffusor (10) eine deutlich andere Geometrie gegenüber dem Innenanteil (7) aufweist,
insbesondere dass sich der Querschnitt des Diffusors (10) gegenüber dem Innenanteil (7) vergrößert,
der (10) ganz insbesondere asymmetrisch ist.

## Claims

1. Process for producing a complex hole (1) in a substrate (4)
which has a surface (12) and an inner surface,
wherein the hole is a continuous film-cooling hole (1) which (1) has an inner proportion (7) and a diffuser (10) which has a widened cross section compared to the inner proportion,
wherein, in a first substep, the inner proportion (7) of the film-cooling hole (1) is produced,
wherein a part of the diffuser (10) is also produced at the same time,
wherein the remnant (16, 18, 28) which still remains is removed in a second and third substep in order to produce the diffuser (10),
wherein, in the first substep, the inner proportion (7) is produced from the surface (12) as far as the opposing inner surface (13) of the substrate with a laser (22) in the first angular position (I),
**characterized in that**,
in the second substep, the angular position of the laser (22) with respect to the surface of the flank is changed compared to the angular position (I) into a second angular position (II),
and the laser is moved in the angular position (II) until a flank (17a) of the diffuser (10) is exposed,
such that in the process a partial volume (18) of the remnant (16, 18, 28) remains, and
**in that**, in the third substep, the angular position of the laser differs from the angular position (II) of the second substep in order to remove the partial volume (18),
wherein the angle of the angular positions (I, II, III) is defined by a centre line of a laser beam (25) of the laser (22) and the surface around the hole.

2. Process according to Claim 1
**characterized in that**
a laser (22) is not moved for the production of the inner proportion (7) or in the angular position (I).

3. Process according to Claim 1 or 2,
**characterized in that**
only one laser (22) is used.

4. Process according to Claim 1, 2 or 3,
**characterized in that**
at least two, in particular only two lasers (22) are used,
said lasers (22) having different performance features.

5. Process according to Claim 1, 2, 3 or 4,
**characterized in that**
different parameters of the laser (22) or of the lasers (22) are used for the production of the inner proportion (7) or in the angular position (I) than during the production of the diffuser (10) or of the remnant (16, 18, 28) or in the angular positions (II, III).

6. Process according to Claim 1, 2, 3, 4 or 5,
**characterized in that**
the laser (22) is moved during the production of the diffuser (10),
in particular in at least one of the angular positions II, III, IV, V,
very particularly is moved over an inner flank (17a, 17b) of the remnant (16, 18, 28).

7. Process according to Claim 1, 2, 3, 4, 5 or 6,
**characterized in that**
in each of a plurality of production steps a partial volume (13, 18) of the remaining remnant (16, 18, 28) is formed by tracing a side flank (17a, 17b) of the remnant (16, 18, 28) of the diffuser (10) with the laser beam (25),
wherein the laser beam (25) is oriented such that it includes an angle of greater than 8° with the traced flank (17a, 17b).

8. Process according to Claim 6 or 7,
**characterized in that**
the laser beam (25) is oriented such that it includes an angle of greater than 10° and less than 90°, preferably of greater than 15° and less than 80° and particularly preferably of greater than 20° and less than 60° with the traced flank (17a, 17b).

9. Process according to one or more of the preceding Claims 1, 2, 3, 4, 5, 6, 7 or 8,
**characterized in that**
a pulsed laser beam (25) is used,
in particular for removing the remnant (16, 18, 28) or in the at least second angular position (II, III, ...), very particularly only for removing the remnant (16, 18, 28).

10. Process according to one or more of the preceding Claims 1, 2, 3, 4, 5, 6, 7, 8 or 9,
in which a laser beam (25) with a variable pulse width is used,
in particular for removing the remnant (16, 18, 28) or
in the at least second angular position (II, III, ...), very particularly only for removing the remnant (16, 18, 28).

11. Process according to Claim 1, 2, 3, 4, 5, 6, 7, 8, 9 or 10,
**characterized in that**
a laser beam (25) having a pulse width in the range of 50 ns to 800 ns,
preferably of 70 ns to 600 ns and in particular of 200 ns to 500 ns, is used,
in particular for removing the remnant (16, 18, 28) or
in the at least second angular position (II, III, ...), very particularly only for removing the remnant (16, 18, 28).

12. Process according to one or more of the preceding Claims 1 to 11,
**characterized in that**
the laser beam (25) with a frequency in the range of 20 kHz to 40 kHz,
preferably of 25 kHz to 35 kHz and in particular of 28 kHz to 32 kHz is used,
in particular for removing the remnant (16, 18, 28) or
in the at least second angular position (II, III, ...), very particularly only for removing the remnant (16, 18, 28).

13. Process according to one or more of the preceding Claims 1 to 12,
**characterized in that**
the continuous hole (1) is formed in a turbine component (120, 130, 155) with a substrate (4),
in which the geometry of the diffuser (10) differs significantly from the inner proportion (7),
in particular **in that** the cross section of the diffuser (10) increases compared to the inner proportion (7),
said diffuser (10) very particularly being asymmetrical.

## Revendications

1. Procédé pour faire un trou ( 1 ) complexe dans un substrat ( 4 ),
qui a une surface ( 12 ) et une face intérieure, le trou étant un trou ( 1 ) traversant de refroidissement pelliculaire, qui ( 1 ) a une partie ( 7 ) intérieure et un diffuseur ( 10 ),
lequel a une section transversale élargie par rapport à la partie intérieure,
dans lequel on produit dans un premier sous-stade la partie ( 7 ) intérieure du trou ( 1 ) de refroidissement pelliculaire,
dans lequel on produit aussi en même temps une partie du diffuseur ( 10 ),
dans lequel on enlève le reste ( 16, 18, 28 ) subsistant encore pour la production du diffuseur ( 10 ) dans un deuxième et troisième sous-stades,
dans lequel dans le premier sous-stade, on produit la partie ( 7 ) intérieure allant de la surface ( 12 ) jusqu'à la face ( 13 ) intérieure opposée du substrat par laser ( 22 ) dans la première position ( I ) angulaire,
**caractérisé en ce que**
dans le deuxième sous-stade, on modifie la position angulaire du laser ( 22 ) par rapport à la surface du flanc en le mettant en comparaison de la position ( I ) angulaire dans une deuxième position ( II ) angulaire,
et on déplace le laser dans la position ( II ) angulaire jusqu'à ce qu'un flanc ( 17a ) du diffuseur ( 10 ) soit mis à nu, de manière à ce qu'il subsiste un volume ( 18 ) partiel du reste ( 16, 18, 28 ) et
**en ce que**, dans le troisième sous-stade, la position angulaire du laser est différente de la position ( II ) angulaire du deuxième sous-stade pour enlever le volume ( 18 ) partiel,
l'angle des positions ( I, II, III ) angulaires étant défini par une ligne médiane d'un faisceau ( 25 ) du laser ( 22 ) et la surface autour du trou.

2. Procédé suivant la revendication 1,
**caractérisé en ce que**
on ne déplace pas un laser ( 22 ) pour la production de la partie ( 7 ) intérieure ou dans la position ( I ) angulaire.

3. Procédé suivant la revendication 1 ou 2,
**caractérisé en ce que**
on n'utilise qu'un laser ( 22 ).

4. Procédé suivant la revendication 1, 2 ou 3,
**caractérisé en ce que**
on utilise au moins deux, notamment seulement deux lasers, qui ( 22 ) ont des caractéristiques de puissance différentes.

5. Procédé suivant la revendication 1, 2, 3 ou 4,
**caractérisé en ce que**
pour la production de la partie ( 7 ) intérieure ou dans la position ( I ) angulaire, on utilise d'autres paramètres du laser ( 22 ) ou des lasers ( 22 ) que pour la production du diffuseur ( 10 ) ou du reste ( 16, 18, 28 ) ou dans les positions ( II, III ) angulaires.

6. Procédé suivant la revendication 1, 2, 3, 4 ou 5,
**caractérisé en ce que**
on déplace le laser ( 22 ) lors de la production du diffuseur ( 10 ),
notamment dans au moins l'une des positions II, III, IV, V angulaires,
en le déplaçant tout à fait notamment sur un flanc ( 17a, 17b ) intérieur du reste ( 16, 18, 28 ).

7. Procédé suivant la revendication 1, 2, 3, 4, 5 ou 6,
**caractérisé en ce que**
dans plusieurs stades de fabrication, on forme respectivement un volume ( 13, 18 ) partiel du reste ( 16, 18, 28 ) subsistant, en faisant parcourir un flanc ( 17a, 17b ) latéral du reste ( 16, 18, 28 ) du diffuseur ( 10 ) par le faisceau ( 25 ) laser,
dans lequel on dirige le faisceau ( 25 ) laser,
de manière à ce qu'il fasse un angle plus grand que 8° avec le flanc ( 17a, 17b ) parcouru.

8. Procédé suivant la revendication 6 ou 7,
**caractérisé en ce que**
on dirige le faisceau ( 25 ) laser de manière à ce qu'il fasse avec le flanc ( 17a, 17b ) parcouru un angle plus grand que 10° et plus petit que 90°, de préférence plus grand que 15° et plus petit que 80°, et d'une manière particulièrement préférée plus grand que 20° et plus petit que 60°.

9. Procédé suivant l'une ou plusieurs des revendications précédentes 1, 2, 3, 4, 5, 6, 7 ou 8,
**caractérisé en ce que**
on utilise un faisceau ( 25 ) laser pulsé,
notamment pour enlever le reste ( 16, 18, 28 ) ou dans la au moins deuxième position ( II, III, ... ) angulaire, tout particulièrement seulement pour enlever le reste ( 16, 18, 28 ).

10. Procédé suivant l'une ou plusieurs des revendications précédentes 1, 2, 3, 4, 5, 6, 7, 8 ou 9,
dans lequel on utilise un faisceau ( 25 ) laser de largeur d'impulsion variable,
notamment pour l'enlèvement du reste ( 16, 18, 28 ) ou dans la au moins la deuxième position ( II, III, ... ) angulaire, tout à fait notamment seulement pour enlever le reste ( 16, 18, 28 ).

11. Procédé suivant l'une ou plusieurs des revendications précédentes 1, 2, 3, 4, 5, 6, 7, 8, 9 ou 10,
**caractérisé en ce que**
on utilise un faisceau ( 25 ) laser et d'une largeur d'impulsion de l'ordre de 50ns à 800ns,
de préférence de 70ns à 600ns et notamment de 200ns à 500ns, notamment pour l'enlèvement du reste ( 16, 18, 28 ) ou dans la au moins deuxième position ( II, III, ... ) angulaire, tout à fait notamment seulement pour l'enlèvement du reste ( 16, 18, 28 ).

12. Procédé suivant l'une ou plusieurs des revendications précédentes 1 à 11,
**caractérisé en ce que**
on utilise le faisceau ( 25 ) laser à une fréquence de l'ordre de 20Khz à 40Khz,
de préférence de 25Khz à 35Khz et notamment de 28Khz à 32Khz,
notamment pour l'enlèvement du reste ( 16, 18, 28 ) ou dans la au moins deuxième position ( II, III, ... ) angulaire, tout à fait notamment seulement pour l'enlèvement du reste ( 16, 18, 28 ).

13. Procédé suivant l'une ou plusieurs des revendications précédentes 1 à 12,
**caractérisé en ce que**
on forme le trou ( 1 ) traversant dans un élément ( 120, 130, 155 ) de turbine ayant un substrat ( 4 ),
dans lequel le diffuseur ( 10 ) a une géométrie nettement autre que celle de la partie ( 7 ) intérieure,
la section transversale du diffuseur ( 10 ) étant notamment agrandie par rapport à celle de la partie ( 7 ) intérieure, le diffuseur ( 10 ) étant tout à fait notamment dissymétrique.
